(19) **Europäisches Patentamt / European Patent Office / Office européen des brevets**

(11) **EP 3 913 795 A1**

(12) **EUROPEAN PATENT APPLICATION**

(43) Date of publication:
24.11.2021 Bulletin 2021/47

(51) Int Cl.:
*H02S 20/32* (2014.01)

(21) Application number: 20175825.7

(22) Date of filing: **20.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Soltec Innovations S.L.**
**30500 Molina de Segura Murcia (ES)**

(72) Inventor: **GUERRERO PÉREZ, JAVIER**
**30800 Lorca (ES)**

(74) Representative: **Isern Patentes y Marcas S.L.**
**Avda. Diagonal, 463 Bis, 2°**
**08036 Barcelona (ES)**

Remarks:
A request for correction claim 1 has been filed pursuant to Rule 139 EPC. A decision on the request will be taken during the proceedings before the Examining Division (Guidelines for Examination in the EPO, A-V, 3.).

(54) **METHOD FOR ENHANCING ENERGY PRODUCTION IN BIFACIAL SOLAR PANEL MODULES**

(57) The invention relates to electric solar trackers moving solar panels and being controlled by a solar tracker controller, accounting for an estimation of the angle of positioning of the bifacial PV modules on a solar single axis tracker, in which the electrical energy produced is maximized by means of a process that quantifies the variation of irradiation on both the front and rear faces depending on the orientation angle of the module for each solar angle, and then the optimal position for the production of electrical energy is decided of all the solar trackers of the plant.

FIGURE 1

EP 3 913 795 A1

**Description**

**OBJECT OF THE INVENTION**

The invention relates to the technical field of renewable energies and more particularly to solar energy.
The object of the invention is directed to managing and controlling a group of single axis solar trackers provided with bifacial solar panels.

**BACKGROUND ART**

Bifacial modules produce solar power from both sides of the panel, also referred as double-sided panels. Whereas traditional opaque-back sheeted panels are "monofacial", bifacial modules expose both the front and backside of the solar cells. When bifacial modules are installed on a highly reflective surface (like a white TPO roof or on the ground with light-coloured stones), some bifacial module manufacturers claim up to a 30% increase in production just from the extra power generated from the rear.
Depending on the installation, it is commonly believed the higher a bifacial module is tilted, the more power it produces from its bifacial properties. Bifacial modules mounted flush to a rooftop block any reflected light from reaching the backside of the cells. That is why bifacial modules perform better on flat commercial rooftops and ground-mounted arrays, because there is more room for tilt and bouncing reflected light to the rear of the modules.
The growing global market for bifacial solar panels on trackers is expanding with new designs and more intense research and development on a range of fronts. The more complex requirements of bifacial panel systems are resulting in early adopter rewards of double-digit yield boosts for clients. As a result, the percentage of bifacial systems is expected to increase rapidly over the next few years. One basic reason that bifacial tracker designs will become increasingly accepted as cost beneficial is that less DC equipment is needed to provide the same energy yield as a single-axis tracker or a fixed-tilt system. The use of less equipment to produce an equal or superior yield lends an overall efficiency of up to 5% across a bifacial tracker system.
Ongoing industry research and field tests of bifacial panel optimization shows that the number of variables in enhancing performance is substantially higher than in a simple mono-facial solar system, whether fixed tilt or tracker-supported. Key factors include those that affect albedo, or ground-reflected light, which has already been shown to boost yield by 15-20% or more. Hence, the industry is facing at least one crucial problem: positioning solar trackers associated to bifacial modules so that energy production is maximised using both sides of the panel, namely maximizing generation on the rear face, but it also maximizes the shadow on the ground so that the energy reaching the rear of the module in the form of reflected irradiation is minimized.
US10289757B2 discloses automated optimization, customization or production methods for the design of a solar photovoltaic array, involving one or more or all components in a photovoltaic array, in which the products include system designs, production drawings, permitting and construction drawings, layouts for the mechanical and electrical systems, bill of materials and financial return analyses of such a photovoltaic array.
WO2007047048A2 discloses an array of solar powered photovoltaic modules is optimally oriented and operated to provide more electrical energy for uses such as powering an electrolyser system for hydrogen production. The array is positioned with its light receiving surface at an optimal angle, preferably a continually changing angle determined by two-axis solar tracking, when continually measured solar irradiance indicates suitable sunlight, and at a horizontal position when measured solar irradiance indicates excessive atmospheric cloudiness.
Existing algorithms optimize only the energy captured by the front side of the panel and are based on tracking either algorithms backed on empirical methods requiring long learning processes, or on measurement-based methods. Those methods known in the art can render unstable behaviours arising from inaccuracies in measurements or rapid changes in irradiation conditions.
Most solar tracker manufacturers seem to opt for astronomical tracking, i.e. keep the solar module sun oriented as if it were a monofacial module. CN108347221 discloses a Two-sided photovoltaic cell panel tracking control method and system with a 3D front and rear irradiation modelling, incorporating different operating modes depending on the rear irradiation measurement. The method disclosed therein comprises detecting a photovoltaic power generation area to obtain topographic characteristic data of the photovoltaic power generation area, surface light reflection characteristic data and power generation area irradiation data ; building a 3D photovoltaic simulation map based on terrain characteristic data, surface light reflection characteristic data and preset photovoltaic power plant layout; according to 3D photovoltaic simulation map, power generation area irradiation data, photovoltaic power plant system parameters, double-sided photovoltaic cells back irradiation data of the panel to create a back irradiation reflection model; and controlling the double-sided photovoltaic panel according to the tracking mode corresponding to the current weather type, combined with the back irradiation reflection model and the front irradiation data collected from the double-sided photovoltaic panel Perform photovoltaic tracking.

EP3400647 discloses a method for controlling the orientation of a solar module comprising a single-axis solar tracker orientable about an axis of rotation, and a photovoltaic device supported by said tracker and having upper and lower photoactive faces, said method comprising the following steps: measurement of a distribution of the so-called incident solar irradiance generated by the incident solar radiation from the sky, onto the upper face, said distribution being established according to a plurality of elevation angles; measurement of a distribution of the so-called reflective solar irradiance generated by the albedo solar radiation corresponding to the reflection of the solar radiation on the ground, onto the lower surface, said distribution being established according to a plurality of elevation angles; determination of an optimum orientation taking into account measurements of said distributions of the incident and reflective solar irradiance; and control of the orientation of the module according to said optimum orientation.

## SUMMARY OF THE INVENTION

Unlike methods that maximize irradiation the method of invention takes into account the technology of the photovoltaic cell, the solar spectrum used by the module and the bifaciality factor of the module, making it suitable for all module technologies, optimizing the electrical energy produced with much greater precision than the mentioned methods; since the object of invention is directed to a method that considers changes in the particular soil conditions produced by environmental conditions or human action, such as rain, snow, grass cutting, etc., optimizing the level of energy produced by the module with levels of precision similar to the methods that optimize electrical production based on measurements, taken directly from the strings without requiring electrical measurement sensors distributed by the plant. Known simulating methods are aimed at optimizing radiation, this is clear since no electricity values are measured. Known methodologies directed to optimizing electricity, measure electricity; whereas the object of the invention simulates electricity generation to optimize electricity production without measuring electricity.

Also, it is more reliable because it does not depend on instantaneous measurements, unlike the rest that are sensitive to erroneous readings from the sensors (such as spot dirt on the sensor). No measurements are taken, instead the different rear irradiation values are simulated, preferably using ray tracing techniques.

Finally, our proposal is effective from the first moment, avoiding the inaccuracies accumulated during the learning process of methods based on machine learning, as well as situations of indeterminacy when these types of methods face new conditions in which they do not have experience and they go to less than optimal positions.

The object of the invention provides a quantification of the irradiation variation on both the front and back sides of the panel based on the orientation angle of the module for each solar angle, and subsequently provides a calculation rendering the optimal position for the production of electrical power of all the solar trackers arranged along the solar plant. For the estimation of rear irradiation at different angles, the geometric relationships between terrain slopes, solar angle, ground albedo, tracker geometry and module layout, as well as the properties of the module are considered.

In a preliminary phase of adjustment of parameters where the characterization of the bifacial ratio is performed according to various parameters, then incorporating the soil colors based on measures that contemplate the reflected wavelength spectrum. At this point, the inclusion of reflectors installed on the soil may directly affect model parameters $(Bn, Cn)$.

Then, for each angle variation the irradiation that reaches the back of the module is estimated in view of a combination of:

- Reflection on the directly illuminated area.
- Reflections on the shaded areas and diffuse irradiation.
- Reflections on the tracker parts themselves.

The method of the invention may give coverage to ground geometries with a mixture of different albedo values due different surface properties, such as grounds comprising grassy areas and grass-free areas. In addition, non-uniform surfaces such as location of reflectors of enhance albedo materials with a particular geometry are also considered with the proposed method.

Furthermore, the decrease in frontal irradiation may also be evaluated due to the loss of orientation depending on the angle.

Finally, based on both quantifications, an estimation of the tracker angle that maximizes the sum of frontal irradiation plus rear irradiation weighted with the module bifaciality, is carried out for each solar tracker.

The method of the invention preferably considers respective positions of each solar tracker as a batch; hence influence of each solar tracker position on the rest tracker production is considered, optimizing the behavior of the ensemble as a whole.

In another aspect of the object of the invention, an arrangement that is capable of maximizing the bifacial gain of the trackers by increasing the irradiation reflected to the rear of the module is provided, said arrangement consisting of at last one membrane or membrane system that acts as reflectors of sunlight on the back of the solar panel, with particular geometries, mechanical and optical properties respectively placed in specific positions along the solar trackers so bifacial gain is increased.

The present invention discloses a method accounting for an estimation of the angle of positioning of the bifacial PV modules on a solar single axis tracker, in which the electrical energy produced is maximized by means of a process that quantifies the variation of irradiation on both the front and rear faces depending on the orientation angle of the module for each solar angle, and then the optimal position for the production of electrical energy is decided of all the solar trackers of the plant. As per the object of the invention the following angles are considered: deviation angle ($\varepsilon$), front of the solar panel oriented angle or just oriented angle ($\beta$), optimum angle ($\theta$); being $\theta = \beta + \varepsilon$

The method object of the invention provides a higher power production in bifacial panels with front and rear sides by yielding an optimal angle position for the solar tracker that maintains a significant rear side power generation, maintaining a high value for the front side power generation. Since the method object of the invention is based on moving the solar tracker according to a parameterized model, unstable behaviours arising from inaccuracies in measurements or rapid changes in irradiation conditions are avoided. Besides, the method hereby described improves production compared to monofacial panel-based methods, which do not consider energy on the back side. In addition, it achieves a level of precision without the need for electrical measurements that are easily accessible in a large PV system. Finally, it maintains reliability before changes in irradiation and soil albedo without the need to spend a learning period where it is ineffective, overcoming this drawback of the methods that use machine learning.

The method of the invention is preferably implemented in the control system of the photovoltaic solar trackers for bifacial modules. The control system processes the input data from the weather forecasts and the sensors of the plant, to determine the angle at which each of the lots must be positioned. The bifacial photovoltaic modules are oriented in the plane determined by the method of the invention, which optimizes the energy produced front and rear sides of the panel.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows a diagram illustrating the flowchart of the method of the invention.
Figure 2.- Shows an illustration depicting the difference between standard tracking (sun-oriented) and after the implementation of the method of the invention.

## DETAILED DESCRIPTION

In a preferred embodiment of the invention it is described a method for the movement of the solar tracker with bifacial modules that maximizes the electrical energy produced, by estimating the irradiation reflected in the ground with the wavelengths that the photovoltaic cell uses to convert it into electrical energy. For the implementation of the method of the invention, it requires a previous phase of parameter adjustment where a characterization of the bifacial ratio is performed based on various parameters, incorporating the colours of the soil based on measurements that contemplate the reflected wavelength spectrum.

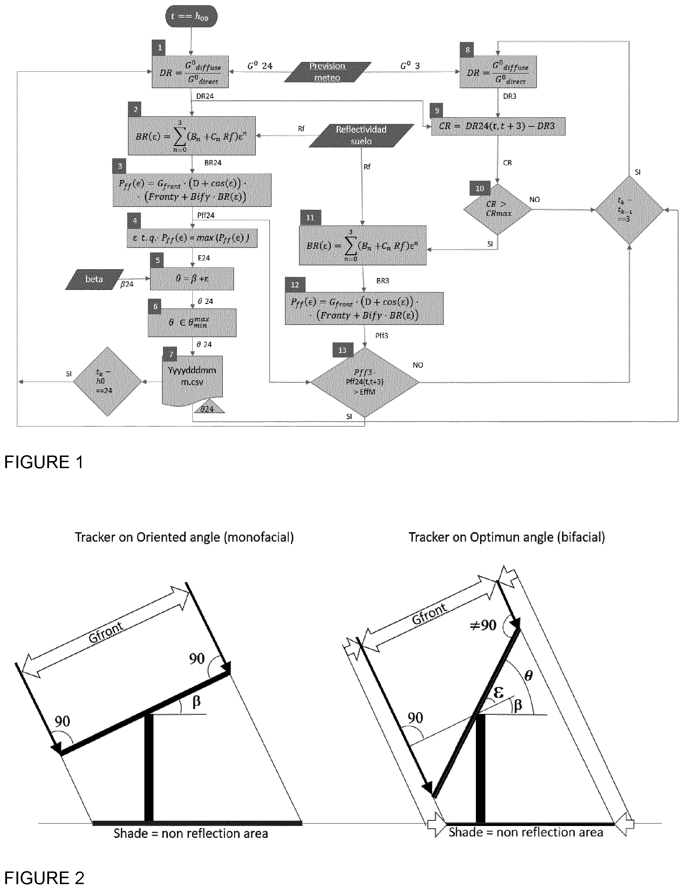

For this preferred embodiment, as depicted in figure 2, an oriented angle ($\beta$) is associated to a monofacial tracking procedure, that is, an angle where the frontal panel is oriented to the sun, an optimum angle ($\theta$) is that tracker's position angle in the bifacial angle (optimized for bifacial). Being a deviation angle ($\varepsilon$) a disorientation with respect to the sun-oriented angle ($\beta$) to the bifacial angle. being $\theta = \beta + \varepsilon$

At this point it might be considered he inclusion of reflecting elements or reflectors , or other kind of reflective soil covers, which directly affect parameters ($Bn$, $Cn$) settings, as they may modify the behaviour of the soil reflection.

The method consists of the following steps, described from a start time of a daily cycle being initial time $t = (h0)$:

(1) Calculation of a first relationship ($DR$) - referred as ($DR24$) in figure 1 - between direct irradiation $G^0_{direct}$ and diffuse irradiation $G^0_{diffuse}$ in the sun-oriented plane of the forecast from a current time, namely from the initial current time $h_0$ to a time of the next day $h_0 + 24$ - twenty four hours.

$$DR = \frac{G^0_{diffuse}}{G^0_{direct}}$$

being $G^0 = G^0 24$

Regarding forecasting: The method mainly uses two variables, *G front* (which is calculated used known methodologies in the art) and the DR (diffuse/direct ratio). And for every wavelength. Depending on the weather forecast provide *direct Ghorizontal* and *diffuse Ghorizontal*, or direct and diffuse component of *Gfront*, may be received. Since there is no wavelength weather forecast available a distribution of typical wavelengths of solar radiation is applied.

(2) Estimation of Bifacial Ratio $BR(\varepsilon)$ - referred in figure 1 as ($BR24$) -considering the spectral response of the irradiation reflected in the soil for a range of deviation angles with respect to the oriented value ($\varepsilon$), from $DR24$ and soil reflection information ($Rf$), for different wavelengths $j$ from a current time $h_0$ to the starting time of the next day. Taking the Bifacial Ratio $BR(\varepsilon)$ as a vector matrix embracing bifacial ratio values for each wavelength $j$ and every deviation angle ($\varepsilon$), that would be expressed according to the parameters $b_{nj}$ y $c_{nj}$, as:

$$BR(\varepsilon) = \sum_{n=0}^{3} A_n \varepsilon^n$$

being: $A_n = B_n + C_n Rf$
So, for each wavelength, the calculation is performed as:

$$BR_j(\varepsilon) = \left(a_{0j} + a_{1j} \cdot \varepsilon + a_{2j} \cdot \epsilon^2 + a_{3j} \cdot \epsilon^3\right)$$

(3) a first evaluation of effective energy ($P_{ff}$) usable by the module for the production of electrical energy- referred as ($Pff24$) in figure 1 - considering the spectral response of the module on each of the front and rear faces, in the range of deviation angle ($\varepsilon$) with respect the oriented angle ($\beta$), from the current time to an initial time of the next day calculated as a sum for all wavelengths $j$, using the matrix formula:

$$P_{ff}(\epsilon) = G_{front} \cdot (D + cos(\varepsilon))\left(Front\gamma + Bif\gamma \cdot BR(\varepsilon)\right)$$

(4) Determination of an angle of deviation ($\varepsilon$) with respect to the oriented angle ($\beta$) that maximizes this energy calculated in step 3, from the current time to the starting time of the next day ($\varepsilon24$).

(5) Assessing the tracker position angle ($\theta$) as the sum of this angle of deviation calculated in step 4 ($\varepsilon$) with the monofacial oriented angle ($\beta$) calculated using existing bibliography methods such as , Solar Position Algorithm (SPA, for the remaining hours until time t=$h0$ of the next day ($\theta24$).

(6) Apply an optimization of the combination of positions of all the solar trackers of the photovoltaic system, and correction of the optimum angle ($\theta$) of each solar tracker incorporating the movement restrictions of the solar tracker.

(7) Generation of a table with the information of the tracker position angle ($\theta$) of the solar panels associated to each solar tracker for each hour, for the remaining hours until $h0$ of the next day (TH24 in figure 1).

(8) Preferably every three hours, calculation of a second relationship between direct and diffuse irradiation (*DR*) in the sun-oriented plane value- referred as (*DR3*) in figure 1 - with updated with the new irradiation forecast next three hours. This step can be combined with averaging checks in the field if any are (*DR3*).

$$DR = \frac{G^0_{diffuse}}{G^0_{direct}}$$

being $G^0 = G^0 3$

(9) Calculation of the variation between the initial forecast DR24 for the next three hours and the current forecast DR3, (CR).

(10) If the comparison exceeds a confidence value (*CR max*), go to step 11. If not, no action is taken.

(11) Estimation of a Bifacial Ratio $BR(\varepsilon)$ which is an update of the first Bifacial Ratio $BR(\varepsilon)$ - referred in figure 1 as *BR*3- now considering update data related to spectral response of the irradiation reflected from the sol (*Rf*), from the measurement or forecast of horizontal irradiation, for a range of deviation angles ($\varepsilon$) around the oriented angle (*B*), for the next hours (preferably three hours) taking the Bifacial Ratio $BR(\varepsilon)$ as a vector matrix embracing bifacial ratio Bifacial Ratio *BR* values for each wavelength *j* and every angle of the range $\varepsilon$, that would be expressed according to the parameters $b_{nj}$ y $C_{nj}$, as:

$$BR(\varepsilon) = \sum_{n=0}^{3} A_n \varepsilon^n$$

being: $A_n = B_n + C_n Rf$
So, for each wavelength, the calculation is performed as:

$$BR_j(\varepsilon) = \left(a_{0j} + a_{1j} \cdot \varepsilon + a_{2j} \cdot \epsilon^2 + a_{3j} \cdot \epsilon^3\right)$$

(12) Evaluation of the effective energy usable by the module for the production of electrical energy - referred as (*Pff*3) in figure 1- considering the spectral response of the module on each of the front and rear faces, in the deviation angle ($\varepsilon$) range, for the next 3 hours calculated as a sum for all wavelengths j, using the matrix formula:

$$P_{ff}(\epsilon) = G_{front} \cdot (D + cos(\varepsilon))\left(Front\gamma + Bif\gamma \cdot BR(\varepsilon)\right)$$

(13) Comparison of (*Pff*3) with the next three hours that were calculated in (*Pff*24). If any of the three hours improves the energy more than a threshold value *EffM*, then it reruns from step 1 and runs through 7

$$Pff\ 3 - Pff24(t, t + 3h) > EffM \quad Pff24(t, t + 3) > EffM$$

being *EffM* set up as a percentage of front irradiation (*effm*) with a minimum irradiation value ($G_{min}$). In a default preferred embodiment of the method of the invention embraces parameters $G_{min}$ = 50 *Wh*/$m^2$, *effm* = 0.01

$$EffM = max(G_{min}, \ effm \cdot G_{front})$$

If this condition is not met, there is no action.

By doing this, the object of the invention solves the problem of how to position and sun track a bifacial PV module so that electrical output maximizes. Since bifacial modules also collects energy from the rear face, so if we direct it to the sun and maximize the front face, we do not always maximize the total energy. Hence, the proposed method calculates the optimum angle so that the modules can maximize energy production.

The method of invention is meant to be ran cyclically each day from the time described from the start time of the daily cycle (*h*0). Furthermore, it is capable of optimally using energy if devices are installed in the plant to increase the albedo of the soil.

Following the flowchart of figure 1, the method of the objection may be deployed with the following starting parameters:

- Soil reflectivity *Rf*, being a vector that describes the reflectivity of the soil for each wavelength (*albedo_j*)

$$Rf = \begin{pmatrix} albedo_0 \\ albedo_j \end{pmatrix}$$

- Model parameters $B_n$ and $C_n$, being parameters adjusted by modelling the plant followed by a Bifacial Ratio (BR) characterization for each value of deviation angle ($\varepsilon$) based on efficiency , such that:

$$B_n = \begin{pmatrix} b_{n0} \\ b_{nj} \end{pmatrix}$$

$$C_n = \begin{pmatrix} c_{n0} \\ c_{nj} \end{pmatrix}$$

Model parameters $b_{nj}$ and $c_{nj}$ may be assessed by previous simulation of *BR* the tracker scenario for different wavelengths chunk ($j$) of the soil, associated to i.e. color at each hour of the day during a year.

- being $\beta$ values of oriented angles of each solar tracker with monofacial panel, calculated using known methods in the art.
- Efficiency of the panel for each given wavelength $j$ for the front and rear faces of the panel are parameters defined by the manufacturer, which in this method are expressed as vectors:

$$Bif\gamma = \begin{pmatrix} \gamma_0^{rear} \Big/ \gamma_0^{front} \\ \gamma_j^{rear} \Big/ \gamma_j^{front} \end{pmatrix}$$

$$Front\gamma = \begin{pmatrix} \gamma_0^{front} \\ \gamma_j^{front} \end{pmatrix}$$

The Bifacial Ratio Matrix *BR*($\varepsilon$) is considered as a vector matrix embracing bifacial ratio values for each wavelength $j$ as a function of deviation angle $\varepsilon$ within the range, that would be expressed according to the parameters $b_{nj}$ y $c_{nj}$, as:

$$BR(\varepsilon) = \sum_{n=0}^{3} A_n \varepsilon^n$$

being: $A_n = B_n + C_n Rf$

So, for each wavelength, the calculation is performed as:

$$BR_j(\varepsilon) = \left( a_{0j} + a_{1j} \cdot \varepsilon + a_{2j} \cdot \epsilon^2 + a_{3j} \cdot \epsilon^3 \right)$$

Whereas, the effective energy is calculated as a sum for all wavelengths $j$, using the following formula:

$$P_{ff}(\epsilon) = G_{front} \cdot (D + cos(\varepsilon)) \left( Front\gamma + Bif\gamma \cdot BR(\varepsilon) \right)$$

Which is equivalent to:

$$P_{ff}(\epsilon) = \sum_{j=0} \left( G_{front} \cdot (D + cos(\varepsilon)) \left( \gamma_j^{front} + \gamma_j^{rear} \cdot BR_j(\varepsilon) \right) \right)$$

**Claims**

1. A method for enhancing energy production in bifacial solar panel modules arranged in a solar plant, the method being **characterised by** comprising at a current time ($h0$):

    i. calculation of a relationship between direct and diffuse irradiation ($DR$) in an oriented angle ($\beta$) based on weather forecast data from the current time ($h0$) until an initial time of the next day ($h0 + 24$),

    ii. estimation of a bifacial ratio ($BR$) considering the spectral response of the irradiation reflected from the soil for a range of deviation angles ($\varepsilon$) values comprised around an oriented angle ($\beta$) value where the front of the bifacial solar panel is oriented to the sun, from the relationship between direct and diffuse irradiation in the sun-oriented plane and soil reflectivity ($Rf$) for different wavelengths until the initial time of the next day ($h0 + 24$),

    iii. evaluation of the effective energy ($Pff$) usable by the solar panel for the production of electrical energy, considering the spectral response of the solar panel on each of the front and rear faces, as a function of a deviation angle ($\varepsilon$) with respect to an oriented angle ($\beta$), from the current time ($h0$) until the initial time of the next day ($h0 + 24$),

    iv. determination of the deviation angle ($\varepsilon$) from the oriented angle value ($\beta$), that maximizes the effective energy usable by the module for the production of electrical energy calculated in step iii, from the current time ($h0$) until the initial time of the next day ($h0 + 24$),

    v. calculation of an optimum angle ($\theta$); being: $\theta = \beta + \varepsilon$, for the remaining hours until the initial time of the next day ($h0 + 24$),

    vi. optimization of the combination of respective optimum angles ($\theta$) of all solar trackers and correction of said respective optimum angles ($\theta$) of each solar tracker by incorporating movement restrictions,

    vii. collecting and storing information of each respective optimum angle ($\theta$) of each tracker for each hour, for the remaining hours until the initial time of the next day ($h0 + 24$),

    viii. updating the relationship between direct and diffuse irradiation ($DR$) in the sun-oriented plane value with new irradiation forecast data generating a second relationship between direct and diffuse irradiation ($DRx$),

    ix. calculation of a variation ($CR$) between the previous assessment forecast of relationship between direct and diffuse irradiation ($DR$) for the next hours and the updated forecast of the relationship between direct and diffuse irradiation ($DR$),

    x. when the variation ($CR$) exceeds a confidence value ($CR\ max$) the method further comprising an estimation of the bifacial ratio ($BR$) considering the soil reflectivity ($Rf$), from the measurement or forecast of horizontal irradiation, for a range of deviation angles ($\varepsilon$) around the oriented value ($\beta$), for the period of forecast update, preference a minimum of three hours, and

    xi. evaluation of the effective energy ($Pff$) usable by the solar panel for the production of electrical energy, considering the spectral response of the solar panel on each of the front and rear faces, as a function of a deviation angle ($\varepsilon$) with respect to an oriented angle ($\beta$) The method of claim 2 wherein the diffuse irradiation ($DR$) value is updated every forecast update period defined, preference a minimum of three hours ($DR3$).

2. The method of claim 1 wherein estimation of rear irradiation at different solar tracker angles comprises considering the properties of the solar panel such as bifaciality and efficiency as a function of radiation wavelength.

3. The method of claim 2 wherein the spectral response of the irradiation reflected in the ground is produced from measurement of horizontal irradiation or forecast of horizontal irradiation.

4. The method of claim 1 further comprising an arrangement configured to maximize the bifacial gain of the trackers by increasing the irradiation reflected to the rear of the module is provided, said arrangement consisting of at last one membrane or membrane system arranged in such a way that acts as reflectors of sunlight on the back of the solar panel.

FIGURE 1

Tracker on Oriented angle (monofacial)    Tracker on Optimun angle (bifacial)

FIGURE 2

Europäisches
Patentamt
European
Patent Office
Office européen
des brevets

# EUROPEAN SEARCH REPORT

**Application Number**

EP 20 17 5825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 110 147 123 A (HEFEI SUNGROW NEW ENERGY TECH CO LTD) 20 August 2019 (2019-08-20) * abstract; figure 2 * | 1-4 | INV. H02S20/32 |
| A | CN 110 568 865 A (TRINA SOLAR CO LTD) 13 December 2019 (2019-12-13) * abstract * | 1-4 | |
| A | WO 2018/217911 A1 (AUGUSTYN COMPANY [US]) 29 November 2018 (2018-11-29) * abstract; figure 1 * | 1-4 | |

**TECHNICAL FIELDS
SEARCHED (IPC)**

G05D
G06F
H02S
F24S

The present search report has been drawn up for all claims

| Place of search | Date of completion of the search | Examiner |
|---|---|---|
| Berlin | 20 October 2020 | Le Meur, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 17 5825

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2020

| Patent document cited in search report | | Publication date | Patent family member(s) | | Publication date |
|---|---|---|---|---|---|
| CN 110147123 | A | 20-08-2019 | NONE | | |
| CN 110568865 | A | 13-12-2019 | NONE | | |
| WO 2018217911 | A1 | 29-11-2018 | US<br>WO | 2018341002 A1<br>2018217911 A1 | 29-11-2018<br>29-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10289757 B2
- WO 2007047048 A2
- CN 108347221
- EP 3400647 A